# EUROPÄISCHE PATENTSCHRIFT

(11) **EP 2 572 596 B1**
(45) Veröffentlichungstag und Bekanntmachung des Hinweises auf die Patenterteilung: **31.05.2017**
(21) Anmeldenummer: 12184963.2
(22) Anmeldetag: 19.09.2012
(51) Int. Cl.: A24C 5/00, B65B 19/28, G05B 19/00

(54) **Anordnung und Verfahren zur Steuerung und Überwachung einer Maschine der Tabak verarbeitenden Industrie**
Assembly and method for controlling and monitoring a machine for the tobacco processing industry
Agencement et procédé de commande et de surveillance d'une machine de l'industrie de traitement du tabac

(30) Priorität: 20.09.2011 DE 102011053792
(43) Veröffentlichungstag der Anmeldung: 27.03.2013
(73) Patentinhaber: Hauni Maschinenbau GmbH, 21033 Hamburg (DE)
(72) Erfinder: Knepper, Thorsten, 21493 Schwarzenbek (DE); Eckroth, Andreas, 21516 Müssen (DE); Heikens, Ralf, 21039 Börnsen (DE); Straube, Michael, 21035 Hamburg (DE)
(74) Vertreter: Stork Bamberger Patentanwälte PartmbB

(56) Entgegenhaltungen:
- EP-B1- 1 113 729
- WO-A2-02/23290
- DE-A1- 10 312 756
- US-A1- 2004 102 864

## Beschreibung

Die vorliegende Erfindung betrifft eine Anordnung zur Steuerung und Überwachung einer Maschine und/oder Maschinenkombination der Tabak verarbeitenden Industrie, umfassend mindestens eine Visualisierungseinheit und eine Steuerungseinheit, wobei die Steuerungseinheit und die Visualisierungseinheit zur Übermittlung von Steuerungs-und Überwachungssignalen mittels eines maschineninternen Netzwerks miteinander verbunden sind, und mindestens eine externe Steuerung, die über eine Schnittstelle mit dem maschineninternen Netzwerk verbunden ist, wobei die Schnittstelle, die Steuerungseinheiten, die Visualisierungseinheit und/oder die externe Steuerung zur zyklischen Übermittlung einer vorbestimmten Auswahl von Steuerungs- und Überwachungssignalen zwischen zumindest einer Steuerungseinheit und der Visualisierungseinheit und der externen Steuerung eingerichtet und ausgebildet sind.

Des Weiteren betrifft die Erfindung ein Verfahren zur Steuerung und Überwachung einer Maschine und/oder einer Maschinenkombination der Tabak verarbeitenden Industrie, wobei die Maschine oder die Maschinenkombination mindestens eine Steuerungseinheit und eine Visualisierungseinheit aufweist, umfassend Übermitteln von Steuerungs- und Überwachungssignalen zwischen den Steuerungseinheiten und der Visualisierungseinheit mittels eines maschineninternen Netzwerks.

Solche Anordnungen und Verfahren kommen insbesondere bei der Steuerung von Zigarettenherstellungsmaschinen sowie Produktionsmaschinen bzw. automatischen Maschinen der Tabak verarbeitenden Industrie zum Einsatz. Ein Steuersystem für eine Zigarettenherstellungsmaschine ist beispielsweise aus dem Dokument EP 1 113 729 B1 bekannt. Die bekannte Maschine umfasst mehrere Produktionseinrichtungen, nämlich eine Tabakstockherstellungseinheit, einen Filteransetzer und eine Übergabevorrichtung. Die Steuerung der vorgenannten Produktionseinrichtungen erfolgt mittels einer Zentralsteuerung, die über einen Feldbus mit den jeweiligen Steuerungen der Tabakstockherstellungseinheit, des Filteransetzers sowie der Übergabevorrichtung verbunden ist.

Sollen durch den Maschinenbetreiber die Daten beispielsweise einer weiteren externen Steuerung zur Verfügung gestellt werden, erfordert dies in der Regel einen Eingriff in das Steuerungsprogramm der Zentralsteuerung. Der damit verbundene Eingriff in das Steuerungsprogramm gefährdet einerseits die fehlerfreie Funktion der Zentralsteuerung. Andererseits werden Ressourcen, d.h. Speicherplatz und die nur begrenzt zur Verfügung stehende Rechenzeit, der Zentralsteuerung zusätzlich belastet. Ein weiterer Nachteil besteht darin, dass der zeitliche Ablauf der Übermittlung von einer Vielzahl von Faktoren abhängt, insbesondere wird die Übermittlung vom Zeitverhalten des Feldbusses und dessen Auslastungsgrad bestimmt. Weiterhin könnte es aufgrund der fehlenden hierarchischen Struktur zu einem ungewollten Überschreiben von Daten, wie beispielsweise von Sensordaten, kommen und/oder Fehlschaltungen auslösen, so dass z.B. Ventile und/oder Motoren fehlgesteuert werden.

Es ist daher Aufgabe der vorliegenden Erfindung, eine Anordnung vorzuschlagen, die die sichere und zuverlässige Bereitstellung maschineninterner Steuerungs- und Überwachungssignale und die Weiterverarbeitung der bereitgestellten Signale erlaubt, ohne in das Steuerprogramm der Zentralsteuerung der Maschine durch eine Programmänderung direkt einzugreifen. Des Weiteren besteht die Aufgabe darin, ein entsprechendes Verfahren vorzuschlagen.

Die Aufgabe wird durch eine Anordnung mit den eingangs genannten Merkmalen dadurch gelöst, dass die Anordnung mindestens einen Taktgeber zur Steuerung der zyklischen Übermittlung der vorbestimmten Auswahl der Steuerungs- und/oder Überwachungssignale zu vorgegebenen Zeitpunkten umfasst, und wobei die mindestens eine Steuerungseinheit oder die Visualisierungseinrichtung den mindestens einen Taktgeber aufweist, und dass der Taktgeber und die mindestens eine Steuerungseinheit und/oder die Visualisierungseinheit derart eingerichtet und ausgebildet sind, dass die vorgegebenen Zeitpunkte, zu denen die vorbestimmte Auswahl der Steuerungs-und Überwachungssignale übermittelt wird, einstellbar sind und, dass der zeitliche Abstand zwischen jeweils zwei aufeinanderfolgenden vorgegebenen Zeitpunkten größer als ein vorgegebenes minimales Zeitintervall ist, wobei das vorgegebene minimale Zeitintervall größer als eine kleinste Zykluszeit des maschineninternen Netzwerks ist.

Dies bietet den Vorteil, dass nach einmaliger anfänglicher Initiierung der Übermittlung durch die externe Steuerung die vorbestimmte Auswahl der Steuerungs- und/oder Überwachungssignale regelmäßig und sich kontinuierlich wiederholend von den Steuerungseinheiten zu der externen Steuerung und umgekehrt übermittelt wird. Die Schnittstelle, die Steuerungseinheiten und die externe Steuerung sind also derart eingerichtet und ausgebildet, dass die zyklische Übermittlung der vorbestimmten Auswahl der Steuerungs- und/oder Überwachungssignale keinen weiteren zusätzlichen Austausch von Steuerungs- und/oder Kontrollinformationen über das maschineninterne Netzwerk erfordert. Ein weiterer Vorteil besteht darin, dass mittels der externen Steuerung anwenderspezifische Programme auf die Steuerungs- und/oder Überwachungssignale zugreifen können, dabei jedoch kein Vollzugriff auf sämtliche Steuerungs- und/oder Überwachungssignale gewährt wird, sondern der Zugriff jeweils nur auf eine vorbestimmte Auswahl der Steuerungs- und/oder Überwachungssignale erfolgt und anwendungsspezifisch angepasst werden kann. So wird ein Vollzugriff auf sämtliche über das maschineninterne Netzwerk zugängliche Steuerungs- und/oder Überwachungssignale vermieden, der ggf. zu Fehlern und nicht gewünschten Betriebszuständen der Maschinen führen könnte. Ferner ist der Taktgeber zur Synchronisation der zyklischen Übermittlung der vorbestimmten Auswahl der Steuerungs- und/oder Überwachungssignale ausgebildet und eingerichtet und übernimmt so eine zentrale Funktion hinsichtlich der zeitlichen Ablaufsteuerung. Ein weiterer Vorteil besteht darin, dass die Schnittstelle, die Steuerungseinheiten die Visualisierungseinheit und/oder die externe Steuerung ferner zur ereignisgesteuerten Übermittlung eingerichtet und ausgebildet sind, um beim Eintritt bestimmter Ereignisse die vorbestimmte Auswahl von Steuerungs- und/oder Überwachungssignalen zu übermitteln. Die Folgende - nicht abschließende Aufzählung - soll mögliche Ereignisse beispielhaft verdeutlichen. Mögliche Ereignisse sind beispielsweise der Wechsel der Tabaksorte an der Maschine und/oder der Maschinenkombination mittels einer entsprechenden Eingabe am Bedienfeld der Maschine, das Einbringen von Zusatzstoffen, das durch ein Steuersignal und/oder eine Eingabe am Bedienfeld veranlasst wird, oder die Inbetriebsetzung einer Zusatzbaugruppe bzw. einer Zusatzeinrichtung mittels eines Steuersignals und/oder durch Eingabe am Bedienfeld.

Das Ereignis umfasst beispielsweise auch das Über- oder Unterschreiten eines einstellbaren Grenzwertes eines Sensorsignals, besonders bevorzugt von Sensorsignalen externer Sensoren, die Umgebungsparameter erfassen, wie beispielsweise die Luftfeuchte und/oder die Umgebungstemperatur oder dergleichen. Ferner ist eine Kombination aus ereignisgesteuerter Übermittlung und zyklischer Übermittlung vorgesehen, um beispielsweise die zyklische Übermitteln durch das Auftreten eines entsprechenden Ereignisses zu initialisieren.
Alle vorgenannten Ereignisse werden vorzugsweise durch einen Signalgeber, der zur Steuerung des ereignisgesteuerten Übermittelns angepasst und eingerichtet ist, erfasst bzw. verarbeitet.

Durch die Anordnung des mindestens einen Taktgebers in einer der Steuereinheiten bildet der jeweilige Taktgeber mit der jeweiligen Steuerungseinheit eine autonome Einheit, die selbsttätig, ohne dass es der Übertragung weitere Steuerungs- und/oder Kontrollsignale über das maschineninterne Netzwerk bedarf, die vorbestimmte Auswahl der Steuerungs- und/oder Überwachungssignale an die externe Steuerung und umgekehrt zyklisch übermittelt. Mittels des Taktgebers sind sowohl die Art der Steuerungs- und/oder Überwachungssignale als auch die Häufigkeit der zyklischen Übertragung in Grenzen freiwählbar eingerichtet ist.
Durch das vorgegebene minimale Zeitintervall wird die maximale Übertragungsgeschwindigkeit der Auswahl der Steuerungs- und/oder Überwachungssignale auf einen entsprechenden Maximalwert begrenzt. Vorzugsweise ist das vorgegebene minimale Zeitintervall größer als eine kleinste Zykluszeit des maschineninternen Netzwerks. Dabei bezeichnet die kleinste Zykluszeit des maschineninternen Netzwerks die kleinste mögliche Zeitdifferenz zwischen zwei Übertragungsvorgängen eines Steuerungs- oder Überwachungssignals. Dies bietet den Vorteil, dass die zyklische Übermittlung zwischen der externen Steuerung und den Steuerungseinheiten mit einer geringeren Frequenz erfolgt, als die Übermittlung von einer der Steuerungseinheiten zu einer anderen der Steuerungseinheiten. Mit anderen Worten ist die gewählte Abtastrate bei der Übermittelung zwischen der externen Steuerung und den Steuerungseinheiten geringer als bei der Übermittelung der entsprechenden Signale von einer der Steuereinheiten zu einer anderen Steuereinheit innerhalb der Maschine. Diese Unterabtastung bewirkt, dass Steuerungs- und/oder Überwachungssignale, die über das maschineinternen Netzwerk innerhalb der Maschine übermittelt werden, nur mit einer entsprechend reduzierten Abtastrate in der externen Steuerung zur Verfügung stehen, so dass die ursprünglichen Steuerungs- und/oder Überwachungssignale nicht vollständig rekonstruierbar sind. So kann eine andernfalls mögliche Analyse der ursprünglichen Steuerungs- und/oder Überwachungssignale, die Aufschluss über maschineninterne Regel- und Steuerungsalgorithmen geben könnte, zuverlässig unterbunden werden. Ferner wird eine mögliche Netzwerküberlastung vermieden.

Eine weitere zweckmäßige Ausgestaltung der Erfindung ist dadurch gekennzeichnet, dass die vorbestimmte Auswahl der Steuerungs- und/oder Überwachungssignale mittels der mindestens einen externen Steuerungseinheit und/oder der Visualisierungseinheit einzustellen ist. So können entsprechend dem anwenderseitigem Bedarf nur diejenigen Steuerungs- und/oder Überwachungssignale ausgewählt werden, auf die mittels eines von der externen Steuerung auszuführenden anwenderspezifischen Programms zugegriffen werden soll. Dies bietet einerseits den Vorteil, dass nur die tatsächlich in der externen Steuerung benötigten Steuerungs- und/oder Überwachungssignale übermittelt werden und so die zu übertragene Datenmenge auf ein Minimum reduziert wird. Andererseits kann auf diese Weise der Zugriff auf bestimmte Steuerungs- und/oder Überwachungssignale beschränkt werden.

Eine weitere vorteilhafte Ausgestaltung der Erfindung zeichnet sich dadurch aus, dass die Anordnung mindestens eine Legitimationseinrichtung umfasst, die zum Freigeben oder Sperren der Übermittlung der Auswahl der vorbestimmten Steuerungs- und/oder Überwachungssignale in Abhängigkeit mindestens eines Legitimationsdatensatzes ausgebildet und eingerichtet ist. Dies bietet den Vorteil, dass die Übermittlung der Auswahl der vorbestimmten Steuerungs- und/oder Überwachungssignale nur nach erfolgter Legitimation erfolgt.

Gemäß einer vorteilhaften Weiterbildung der Erfindung umfasst die Legitimationseinrichtung mindestens einen Datenspeicher, wobei der Datenspeicher mindestens einen der Legitimationssätze umfasst. Anders ausgedrückt ist der Datenspeicher zur Speicherung eines oder mehrerer der Legitimationsdatensätze eingerichtet und ausgebildet. Dies bietet den Vorteil, dass die Übermittlung der Auswahl der vorbestimmten Steuerungs- und/oder Überwachungssignale in Abhängigkeit des Vorhandenseins bzw. Nichtvorhandenseins des Datenspeichers eingerichtet ist, so dass nur derjenige Benutzer auf die entsprechende Signale zugreifen kann, der über den Datenspeicher mit dem mindestens einen Legitimationsdatensatzes verfügt. Auf diese Weise wird der Betrieb der Maschine bzw. der Zugriff auf die Auswahl der vorbestimmten Steuerungs- und/oder Überwachungssignale auf Maschinenbenutzer beschränkt, die sich mittels des Datenspeichers bzw. des darauf gespeicherten Legitimationsdatensatz als berechtigte Maschinenbenutzer authentifizieren können.

Gemäß einer besonders bevorzugten Weiterbildung ist mindestens ein erster der Datenspeicher als Kopierschutzstecker, beispielsweise als Dongle, vorzugsweise als USB-Dongle, und/oder ein zweiter der Datenspeicher als mobiler Datenträger ausgebildet und eingerichtet. Als mobiler Datenträger kommen beispielsweise eine oder mehrere CompactDiscs (CD), Digital Versatile Discs (DVD), Flash-Speicherchips oder dergleichen zum Einsatz. Dies bietet den Vorteil, dass ein Zugriff auf die Maschine bzw. auf die Auswahl der vorbestimmten Steuerungs- und/oder Überwachungssignale seitens eines Maschinenbenutzer mittels der Legitimationseinrichtung nur dann gewährt wird, wenn der Kopierschutzstecker mit dem auf dem mobilen Datenträger gespeicherten Legitimationsdatensatz korrespondiert. Mit anderen Worten wird die Legitimierung an mehrere Hardwaremerkmale gebunden, nämlich einerseits an einen Kopierschutzstecker und andererseits an einen mobilen Datenträger. Eine Freigabe erfolgt nur dann, wenn beide Hardwaremerkmale vorhanden sind, andernfalls erfolgt eine Sperrung.

Des Weiteren wird die Aufgabe durch das eingangs genannte Verfahren zur Steuerung und Überwachung einer Maschine der Tabak verarbeitenden Industrie gelöst, das sich auszeichnet durch Erzeugen eines Taktes mittels eines Taktgebers und Steuern der zyklischen Übermittlung der vorbestimmten Auswahl der Steuerungs- und/oder Überwachungssignale zu vorgegebenen Zeitpunkten auf Basis des erzeugten Taktes und durch Einstellen der vorgegebenen Zeitpunkte des Taktgebers mittels der mindestens einen Steuerungseinheit und/oder der Visualisierungseinrichtung, wobei der zeitliche Abstand zwischen jeweils zwei aufeinanderfolgenden vorgegebenen Zeitpunkten größer als ein vorgegebenes minimales Zeitintervall ist, wobei das vorgegebene minimale Zeitintervall größer als eine kleinste Zykluszeit des maschineninternen Netzwerks ist. Die sich daraus ergebenden Vorteile wurden bereits im Zusammenhang mit der Vorrichtung zur Durchführung des Verfahrens erläutert, weshalb zur Vermeidung von Wiederholungen auf die entsprechenden Passagen verwiesen wird.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. Die Zeichnung zeigt:
- Fig. 1: eine schematische Darstellung der erfindungsgemäßen Anordnung,
- Fig. 2: eine schematische Darstellung der in Fig. 1 gezeigten Anordnung einschließlich der zu steuernden Maschine,
- Fig. 3: eine schematische Darstellung zum Ablauf der Auswahl der zu übermittelten Steuerungs- und/oder Überwachungssignale,
- Fig. 4: eine schematische Darstellung zur Veranschaulichung der Funktionsweise der Legitimationseinrichtung mittels Kopierschutzstecker und mobilem Datenträger,
- Fig. 5: eine schematische Darstellung zur Veranschaulichung der Funktionsweise der Legitimationseinrichtung mittels Kopierschutzstecker,
- Fig. 6: eine weitere schematische Darstellung zur Veranschaulichung der Funktionsweise der in Fig. 4 gezeigten Legitimationseinrichtung,
- Fig. 7: eine schematische Darstellung einer weiteren beispielhaften Ausführung der in der Fig. 1 gezeigten Anordnung und
- Fig. 8: einen Querschnitt durch eine Verteilereinheit, die mittels der erfindungsgemäßen Anordnung bzw. mittels des Verfahrens gesteuert und überwacht wird.

Die vorliegende Erfindung ist besonders geeignet zur Steuerung einer Maschine oder einer Maschinenkombination zur Herstellung stabförmiger Artikel der Tabak verarbeitenden Industrie, insbesondere zur Steuerung einer Zigarettenherstellungsmaschinenkombination, beispielsweise vom Typ Protos aus dem Hause der Anmelderin. Jedoch ist die vorliegende Erfindung nicht allein auf eine Anordnung bzw. ein Verfahren zur Steuerung von Zigarettenmaschinen beschränkt, sondern ist grundsätzlich für jede Maschine geeignet, die stabförmige Artikel der Tabak verarbeitenden Industrie produziert bzw. verarbeitet sowie fördert bzw. speichert, insbesondere auch für Filter-und Multifilterherstellungsmaschinen sowie Transfer- und Speichersysteme. Die stabförmige Artikel der Tabak verarbeitenden Industrie umfassen neben Filterzigaretten eine Vielzahl von weiteren Artikeln, beispielsweise Filterstäbe, Multifilterstäbe, Plainzigaretten, Zigarillos mit und ohne Filter und dergleichen, so dass die Anordnung und das erfindungsgemäße Verfahren auch zur Steuerung entsprechender Maschinen geeignet sind.

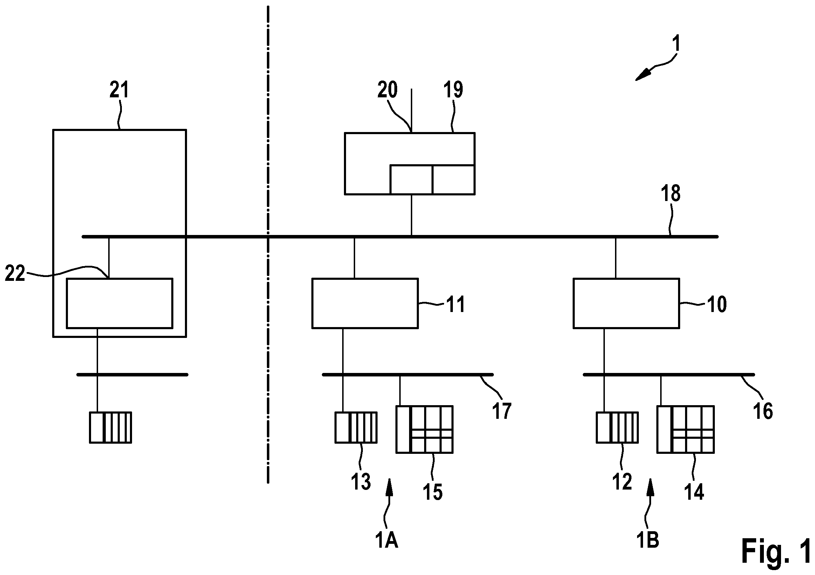

Im Folgenden werden die erfindungsgemäße Anordnung sowie das Verfahren anhand der Figuren näher erläutert. Die Figur 1 zeigt eine schematische Darstellung der erfindungsgemäßen Anordnung zur Steuerung und Überwachung der Maschinenkombination 1 der Tabak verarbeitenden Industrie. Die Maschinenkombination 1 umfasst beispielsweise mindestens zwei Produktionseinheiten, beispielsweise eine Verteilereinheit und eine Strangmaschine vom Typ SE sowie einen Filteransetzmaschine vom Typ MAX aus dem Hause der Anmelderin. Jeder der Produktionseinrichtungen ist zumindest eine Steuerungseinheit 10, 11 zugeordnet. Die Steuerungseinheiten 10, 11 dienen der Überwachung und Steuerung der jeweiligen Maschine 1A, 1B bzw. der Produktionseinheit und sind daher vorzugsweise als lokale Steuerungseinheiten eingerichtet, d.h. als separate Steuerungseinheiten 10, 11 jeweils einer der Maschinen 1A, 1B zugeordnet und in diese integriert. Die Steuerungseinheiten 10, 11 sind über einen Feldbus 16, 17 jeweils mit Ein-/Ausgabeschnittstellen 12, 13 und Antriebssteuerungen 14, 15 zur Ansteuerung von Motoren, Aktoren, Servomotoren und dergleichen verbunden. Die Ein-/Ausgabeschnittstellen dienen der Verarbeitung von Sensorsignalen und der Ansteuerung weiterer Einrichtungen. Bevorzugt sind die Ein-/Ausgabeschnittstellen 12, 13 und/oder die Antriebssteuerung 14, 15 über einen Feldbus 16, 17 mit der jeweiligen Steuerungseinheit 10, 11 verbunden. Alternativ sind die Ein-/Ausgabeschnittstellen 12, 13 und/oder die Antriebssteuerung 14, 15 direkt mit der jeweiligen Steuerungseinheit 10, 11 verbunden. Besonders bevorzugt ist das lokale Bussystem 16, 17 als Profibus DP oder EtherCAT-Bus ausgebildet. Die Steuerungseinheiten 10, 11 sind vorzugsweise als hardware- oder softwarebasierte speicherprogrammierbare Steuerung (SPS) ausgebildet. Jedoch können die Steuerungseinheiten 10, 11 auch auf einer Industrie-PC-Plattform, einer analogen und/oder digitalen Steuerungsschaltung basieren oder als "Embedded"-Mikrocomputersystem ausgebildet sein.

Die Steuerungseinheiten 10, 11 sind mittels eines maschineninternen Netzwerks 18 zur Übertragung von Steuerungs- und Überwachungssignalen miteinander verbunden. Die Steuerungs- und Überwachungssignale sind bevorzugt Digitalsignale, die maschinenrelevante Daten umfassen, beispielsweise Geschwindigkeits-, Position-, Sensor-, Temperatur- oder Prozessparameterdaten. Alternativ sind die Steuerungs- und Überwachungssignale analoge Signale. Das maschineninterne Netzwerk 18 ist, vorzugsweise als Maschinensteuerungsbus zur Übertragung der Steuerungs- und Überwachungssignale, insbesondere zwischen der Visualisierungseinheit 19 und den Steuerungseinheiten 10, 11, ausgebildet und eingerichtet. Auf diese Weise ist es möglich, alle zur Steuerung der Maschinen 1A, 1B und/oder Produktionseinrichtungen erforderlichen Steuerungs- und/oder Überwachungssignale zwischen den einzelnen Steuerungseinheiten 10, 11 der jeweiligen Maschine 1A, 1B zu übermitteln und auszutauschen. An das maschineninterne Netzwerk 18 ist eine Visualisierungseinheit 19 angeschlossen, die als weitere Steuerungseinheit ausgebildet ist, und die zum Bedienen der Maschinen 1A, 1B, zur Auswertung der Steuerungs- und Überwachungssignale sowie zur Anzeige ausgewählter Daten ausgebildet ist. Weiter bevorzugt umfasst die Visualisierungseinheit 19 eine Ethernet-Schnittstelle 20 zur Bereitstellung von ausgewählten Daten über das Ethernet. Ein externer Zugriff auf die über das maschineninterne Netzwerk 18 übertragenen Steuerung- und/oder Überwachungssignale ist ausschließlich durch die unmittelbar mit dem maschineninternen Netzwerk 18 verbundenen Einrichtungen möglich. Mit anderen Worten handelt es sich um ein geschlossenes Netzwerk, das den Austausch von Daten und Signalen zwischen jeder der Steuerungseinheiten 10, 11, der Visualisierungseinheit 19 und/oder ggf. weiteren mit dem maschineninternen Netzwerk 18 verbundenen maschineninternen Einrichtungen erlaubt. Zudem wird ein externer Zugriff auf den Feldbus 16, 17 zuverlässig verhindert. Zusätzlich zu den Steuerungseinheiten 10, 11 und der Visualisierungseinheit 19 ist eine externe Steuerung 21 über eine Schnittstelle 22 mit dem maschineninternen Netzwerk 18 verbunden. Vorzugsweise ist die externe Steuerung 21 eine PC-basierte speicherprogrammierbare Steuerung (SPS), beispielsweise vom Typ Cx1020 der Firma Beckhoff, Verl, Deutschland basierend auf dem Betriebssystem WindowsXPembedded oder dergleichen. Die externe Steuerung 21 sowie die Visualisierungseinheit 19, die Schnittstelle 22 und die Steuerungseinheiten 10, 11 sind dabei zur zyklischen Übermittlung einer vorbestimmten Auswahl der Steuerungs- und/oder Überwachungssignalen zwischen zumindest einer der Steuerungseinheiten 10, 11 und der externen Steuerung 21 eingerichtet und ausgebildet. Auf diese Weise kann die externe Steuerung 21 mit einem anwenderspezifischen Programm 38 ausgestattet werden, das über die Schnittstelle 22 auf eine vorbestimmte Auswahl der Steuerungs- und/oder Überwachungssignale zugreifen kann. Die freiprogrammierbare Steuerung 21 stellt damit eine sogenannte Kunden-SPS dar, also eine externe SPS des Maschinenbetreibers, die kundenseitig mit eigenen Applikationen versehen werden kann, wobei dieser der Zugriff auf die vorbestimmte Auswahl der Steuerungs- und Überwachungssignale mittels der externen Steuerung 21 ermöglicht wird. Besonders bevorzugt erfolgt die Übermittlung der vorbestimmten Auswahl der Steuerungs- und/oder Überwachungssignale unidirektional, nämlich von der Visualisierungseinheit 19 und/oder den Steuerungseinheiten 10, 11 an die externe Steuerung 21, d.h. die externe Steuerung 21 ist so eingerichtet, dass sie ausschließlich lesend auf die Steuerungs- und/oder Überwachungssignale zugreifen kann. Auf diese Weise wird eine Manipulation der Steuerungs- und Überwachungssignale durch die externe Steuerung 21 bzw. durch das von der externen Steuerung 21 ausgeführte anwenderspezifische Programm 38 in jedem Fall ausgeschlossen. Die externe Steuerung 21 erlaubt so zwar eine Weiterverarbeitung der Steuerungs- und Überwachungssignale, beispielsweise zu Auswerte- und Analysezwecken bzw. als Grundlage zur Steuerung einer weiteren Maschine auf Basis der aus den Steuerungs- und/oder Überwachungssignalen ermittelbaren Betriebsparameter, jedoch ist ein unmittelbarer Eingriff in den Steuerungsablauf der Maschine 1A, 1B bzw. der Maschinenkombination 1 ausgeschlossen.

Die externe Steuerung 21 ist alternativ jedoch nicht ausschließlich für den zuvor beschriebenen unidirektionalen Übertragungsbetrieb eingerichtet, sondern ebenso für eine bidirektionale Datenübertragung, d.h. die externe Steuerung 21 erlaubt sowohl das Auslesen der Steuerungs- und/oder Überwachungssignale als auch das Verändern der ausgewählten Steuerungs- und/oder Überwachungssignale. So ist es möglich, den Zugriff mittels des mit der externen Steuerung 21 ausgeführten anwenderspezifischen Programms 38 nur auf bestimmte und zuvor festgelegte Steuerungs- und/oder Überwachungssignale zu beschränken. Mit dieser Zugriffsrestriktion wird erreicht, dass jeweils nur die vorgegebene Auswahl der Steuerungs- und/oder Überwachungssignale mittels der externen Steuerung 21 beeinflussbar ist. Beispielsweise wird ein Schreibzugriff nur für Steuerungs- und Überwachungssignale gewährt, die bei Veränderung durch das anwenderspezifische Programm 38 zu keiner Fehlfunktion der Steuerung der Maschinenkombination 1 bzw. der Maschine 1A, 1B führen können.

Bevorzugt zeichnet sich die externe Steuerung 21 dadurch aus, dass diese freiprogrammierbar ist. Anders ausgedrückt ist die externe Steuerung separat und unabhängig von der Steuerungseinheit 10, 11 bzw. weiteren (in der Zeichnung nicht gezeigten) Maschinensteuerungen programmierbar ausgebildet und eingerichtet. Die externe Steuerung 21 ist folglich nicht zwingend räumlich getrennt von der Steuerungseinheit 10, 11 bzw. den weiteren Maschinensteuerungen angeordnet. Vorzugsweise ist die externe Steuerung 21 jedoch räumlich getrennt angeordnet. Besonders bevorzugt ist die externe Steuerung 21 als eine vom Maschinenbenutzer freiprogrammierbare Steuerung ausgebildet. In diesem Fall ist die externe Steuerung 21 weiter bevorzugt als intelligente Baugruppe in einem Einschub bzw. einem Rack und/oder in dem Gehäuse der Steuerungseinheit 10, 11 bzw. im Gehäuse der weiteren Maschinensteuerungen angeordnet.

Ein besonderer Vorteil der vorliegenden Erfindung besteht darin, dass die Schnittstelle 22, die Steuerungseinheiten 10, 11 und die externe Steuerung 21 sowie die Visualisierungseinrichtung 19 zur zyklischen Übertragung der vorbestimmten Auswahl der Steuerungs- und/oder Überwachungssignale ausgebildet sind. Unter zyklischer Übertragung ist zu verstehen, dass die vorbestimmte Auswahl der Steuerungs- und/oder Überwachungssignale repetierend zu festgelegten Zeitpunkten übertragen wird. Anders ausgedrückt sind die Schnittstelle 22, die Steuerungseinheiten 10, 11 und die externe Steuerung 21 derart ausgebildet, dass die Übertragung der vorbestimmten Auswahl der Steuerungs- und/oder Überwachungssignale zu festgelegten Zeitpunkten in regelmäßigem zeitlichem Abstand erfolgt. Dies bietet den Vorteil, dass für die Übermittelung der Auswahl der Steuerungs- und/oder Überwachungssignale keine weiteren Kontrolldaten und/oder Kontrollsignale zwischen der externen Steuerung 21 und den Steuereinheiten 10, 11 und der Visualisierungseinheit 19 mittels der Schnittstelle 22 übertragen werden müssen. Die Steuerungseinheiten 10, 11 und/oder die Visualisierungseinheit 19 sind daher derart eingerichtet, dass diese autark die vorbestimmte Auswahl der Steuerungs- und/oder Überwachungssignale an die externe Steuerung 21 übermitteln. Ebenso ist die externe Steuerung 21 zum autarken Abruf der Auswahl der Steuerungs- und/oder Überwachungssignale eingerichtet und ausgebildet. Die Übertragung von Kontrolldaten und/oder Kontrollsignalen beschränkt sich damit zunächst auf eine einmalige Übermittlung zur Festlegung der vorbestimmten Auswahl der Steuerungs- und/oder Überwachungssignale, also der Frage, welche der Steuerungs- und/oder Überwachungssignale übermittelt werden sollen. Die zyklische Übermittelung der ausgewählten Steuerungs- und/oder Überwachungssignale erfolgt anschließend, wie zuvor beschrieben, automatisiert.

Vorzugsweise ist die Schnittstelle 22 mit dem maschineninternen Netzwerk 18 mittels einer Netzwerkanschaltung verbunden. Weiter bevorzugt ist diese Netzwerkanschaltung als Busanschaltung ausgebildet. Die Verbindung der Schnittstelle 22 mit dem maschineninternen Netzwerk 18 ist vorteilhafter Weise als eine direkte Verbindung ausgebildet. Optional umfasst die direkte Verbindung Mittel zur galvanischen Trennung und/oder zur Pegelumsetzung bzw. Mittel zur Protokollumsetzung. Mit anderen Worten ist die Schnittstelle 22 zur Verbindung der externen Steuerung 21 mit dem maschineninternen Netzwerk 18 als lokale Schnittstelle ausgebildet. Die Schnittstelle 22 stellt daher keine Verbindung zu übergeordneten Netzwerken, wie beispielsweise einem Fabrikbus, zu einem übergeordneten Feldbus oder zu weiteren dezentralen lokalen Steuerungen her.

Vorzugsweise weist die Anordnung mindestens einen Taktgeber zur Steuerung der zyklischen Übermittlung der vorbestimmten Auswahl der Steuerungs- und/oder Überwachungssignale zu vorgegebenen Zeitpunkten auf. Der bzw. die Taktgeber dienen der zeitlichen Synchronisation der Übermittlung der vorbestimmten Auswahl der Steuerung- und Überwachungssignale. Die Taktgeber sind ferner so eingerichtet, dass diese zu den vorgegebenen Zeitpunkten die Übermittelung der vorbestimmten Auswahl der Steuerungs- und/oder Überwachungssignale veranlassen. Die Taktgeber sind wahlweise hardware- oder softwarebasiert ausgebildet. Mittels der Taktgeber wird ein Takt erzeugt, auf Basis dessen die zyklische Übermittlung der vorbestimmten Auswahl der Steuerungs- und/oder Überwachungssignale erfolgt. Besonders bevorzugt weist mindestens eine der Steuerungseinheiten 10, 11 einen der Taktgeber auf. So können die durch die vorbestimmte Auswahl vorgegebenen Steuerungs- und/oder Überwachungssignale unmittelbar in der jeweiligen Steuerungseinheit 10, 11 verarbeitet und an die externe Steuerung 21 zu den vorgegebenen Zeitpunkten übermittelt werden. Umgekehrt ist es möglich, veranlasst durch den Taktgeber der Steuerungseinheit 10, 11, Zugriffe auf die durch die vorbestimmte Auswahl festgelegten Steuerungs- und/oder Überwachungssignale seitens der externen Steuerung 21 zu den vorgegebenen Zeitpunkten durchzuführen.

Gemäß einer weiteren vorteilhaften Ausbildung der Erfindung, ist der Taktgeber derart eingerichtet und ausgebildet, dass die vorgegebenen Zeitpunkte mittels der der Steuerungseinheiten 10, 11 und/oder der Visualisierungseinheit 19 einstellbar sind. Anders ausgedrückt umfassen die Steuerungseinheiten 10, 11 und/oder die Visualisierungseinheit 19 Unterprogramme, die es erlauben, die vorgegebenen Zeitpunkte einzustellen. Auf diese Weise können die Zeitpunkte, zu denen die vorbestimmte Auswahl der Steuerungs- und/oder Überwachungssignale übermittelt wird, durch das anwenderspezifische Programm determiniert werden. Die dazu erforderlichen Unterprogramme sind beispielsweise als eine Programmbibliothek 37 in den Steuerungseinheiten 10, 11 und/oder der Visualisierungseinheit 19 abgelegt.

Vorzugsweise ist der zeitliche Abstand zwischen jeweils zwei aufeinanderfolgenden vorgegebenen Zeitpunkten größer als ein vorgegebenes Zeitintervall. Die Steuerungseinheiten 10, 11 und/oder die Visualisierungseinheit 19 sind hierzu derart eingerichtet und ausgebildet, dass der zeitliche Abstand zwischen jeweils zwei aufeinanderfolgenden vorgegebenen Zeitpunkten auf einen durch das vorgegebene Zeitintervall festgelegten minimalen Wert begrenzt ist. Besonders bevorzugt ist das vorgegebene Zeitintervall größer als eine kleinste Zykluszeit des maschineninternen Netzwerks 18. Dabei bezeichnet die kleinste Zykluszeit des maschineninternen Netzwerks 18 die kleinst mögliche Zeitdifferenz zwischen zwei Übertragungsvorgängen der Steuerungs- oder Überwachungssignale. Die kleinste Zykluszeit entspricht daher dem reziproken Wert der maximalen Übertragungsgeschwindigkeit des maschineninternen Netzwerks 18. Dies soll im Folgenden anhand eines Beispiels näher erläutert werden. Ist die maximale Übertragungsgeschwindigkeit eines der Steuerungs- oder Überwachungssignale über das maschineninterne Netzwerk 18 beispielweise auf 200 Digitalwerte pro Sekunde beschränkt, so beträgt die kleinste Zykluszeit 1/200 Sekunde bzw. 5 ms. Folglich ist der Betrag des vorgegebenen Zeitintervalls größer als 5 ms. Besonders bevorzugt ist das vorgegebene Zeitintervall um den Faktor 2 bis 100 größer als die kleinste Zykluszeit. Dies bietet den Vorteil, dass die im maschineninternen Netzwerk 18 übertragenen Steuerungs- und/oder Überwachungssignale um 2 bis 100 mal langsamer abgetastet werden, also nur jeder zweite bis hundertste Wert der Auswahl der Steuerungs- und/oder Überwachungssignale an die freiprogrammierbare Steuerung 21 und umgekehrt übermittelt wird. Auf diese Weise wird zuverlässig verhindert, dass die mittels der über die externen Steuerung 21 zugänglichen Steuerungs- und/oder Überwachungssignale detailliert analysiert und ausgewertet werden können und so maschineninterne in den jeweiligen Steuerungseinheiten 10, 11 erfolgende Regel- und Steueralgorithmen anhand der Signalverläufe analysiert und so möglicherweise Rückschlüsse auf die in den Steuerungseinheiten 10, 11 zum Einsatz kommenden Steuerungs- und Regelalgorithmen gezogen werden können. Besonders bevorzugt ist das vorgegeben Zeitintervall größer oder gleich 50 ms, während die Zykluszeit des maschineninternen Netzwerks 18 kleiner gleich 5 ms ist.

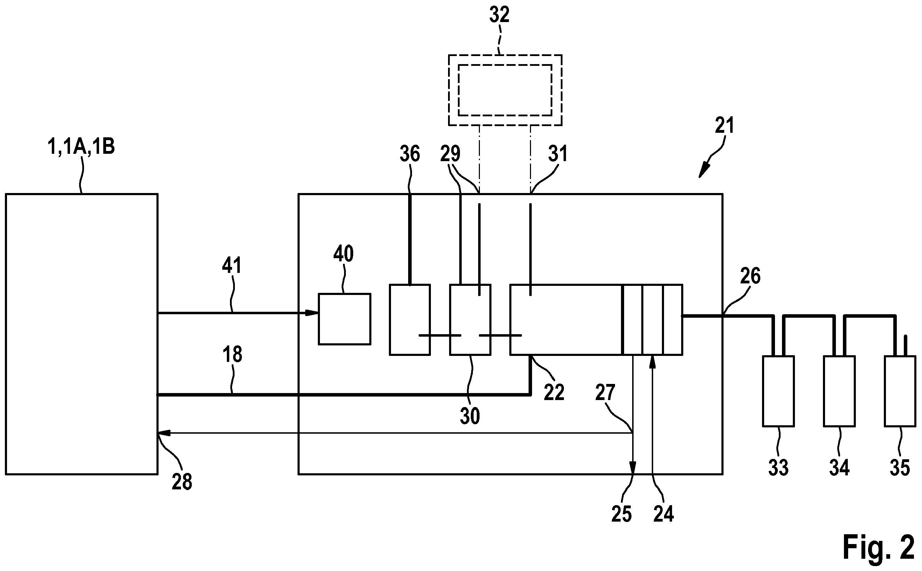

Figur 2 zeigt eine schematische Darstellung der in Fig. 1 gezeigten Anordnung einschließlich der zu steuernden Maschinenkombination 1. Die Maschinen 1A, 1B umfassen die in der Fig. 2 nicht dargestellten Produktionseinheiten, die Steuerungseinheiten 10, 11, die Antriebssteuerung 14, 15 sowie das Feldbussystem 16, 17 und die Visualisierungseinheit 19. Das maschineninterne Netzwerk 18 ist über die Schnittstelle 22 mit der externen Steuerung 21 verbunden. Die externe Steuerung 21 umfasst vorzugsweise eine Mehrzahl weiterer Schnittstellen, beispielsweise eine Dateneingabeschnittstelle 24, eine Datenausgabeschnittstelle 25 und eine Peripherieschnittstelle 26. Die Peripherieschnittstelle 26 eignet sich zum Anschluss weiterer Einrichtungen, beispielsweise von weiteren Sensoren 33, weiteren Eingabeschnittstellen 34 und/oder weiteren Ausgabeschnittstellen 35. Die Peripherieschnittstelle 26 ist als Feldbusschnittsstelle, vorzugsweise als EtherCAT-Schnittstelle, ausgebildet. Die Dateneingabeschnittstelle 24 umfasst sowohl digitale als auch analoge Eingänge, beispielsweise 8 Digitaleingänge sowie zwei Analogeingänge. Korrespondierend dazu umfasst die Datenausgabeschnittstelle 25 ebenfalls sowohl digitale als auch analoge Ausgänge, beispielsweise 8 Digitalausgänge sowie zwei Analogausgänge. Weiter bevorzugt umfasst die Datenausgabeschnittstelle 25 einen Stoppsignalausgang 27 der mittels einer elektrischen oder optischen Leitung unmittelbar mit einem Stoppsignaleingang 28 der Maschine 1 bzw. einer übergeordneten Steuerungseinheit und/oder mit den jeweiligen Steuerungseinheiten 10, 11 verbunden ist. Über den Stoppsignalausgang 27 kann im Bedarfsfall ein Stoppsignal an die Maschine 1A, 1B bzw. an die jeweiligen Steuerungseinheiten 10, 11 geschickt werden, um die Maschine 1A, 1B auch in dem Fall einer vorliegenden Störung des maschineninternen Netzwerks 18 anzuhalten zu können. Zur Spannungsversorgung umfasst die Anordnung vorzugsweise ein Netzteil 40. Das Netzteil 40 ist zur Wandlung einer von der Maschine 1A, 1B bereitgestellten Netzspannungsversorgung 41 eingerichtet und ausgebildet.

Optional umfasst die in der Figur 2 gezeigte Anordnung weitere Schnittstellen, beispielsweise mindestens zwei serielle Schnittstellen, nämlich vorzugsweise zwei USB-Schnittstellen 29 sowie zwei USB-Hubs 30, die mit der externen Steuerung 21 verbunden sind. Zusätzlich weist die externe Steuerung 21 mindestens eine Anzeigeschnittstelle 31 auf, beispielsweise in Form einer VGA- oder DVI-Schnittstelle oder dergleichen, über die ein oder mehrere Anzeigegeräte 32, z.B. ein TFT-Display, angeschlossen ist/sind. Optional ist das Anzeigegerät 32 zusätzlich mit der externen Steuerung 21 über eine der USB-Schnittstelle 29 verbunden, so dass das Anzeigegerät 32 zugleich zur Informationseingabe und Übermittelung derselben an die externe Steuerung 21 eingerichtet ist. In diesem Fall ist das Anzeigegerät 32 vorzugsweise als Touch-Screen-Display ausgebildet und eingerichtet. Optional umfasst die Anordnung eine Ethernet-Schnittstelle 36 zur Anbindung der externen Steuerung 21 an weitere Netzwerke.

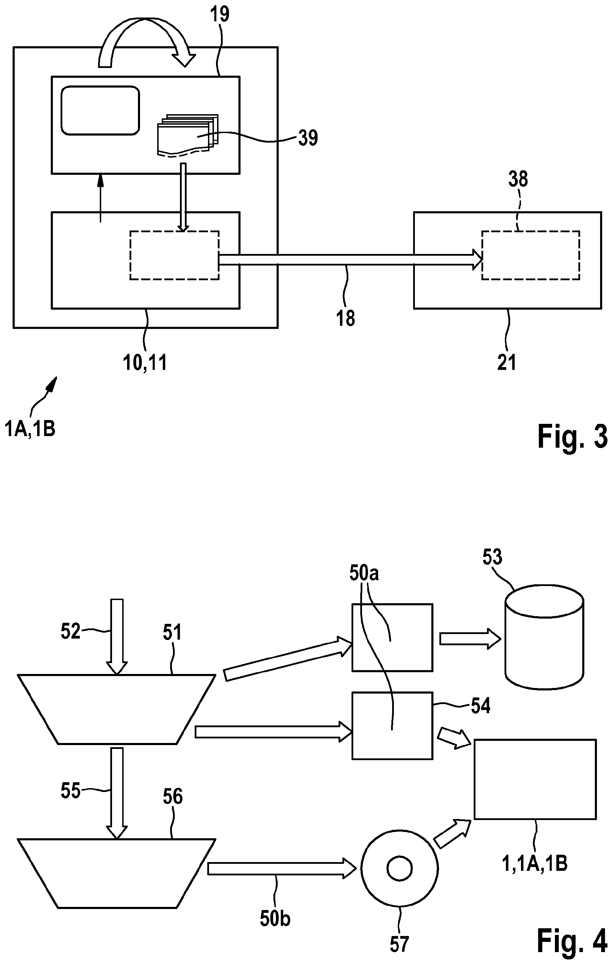

Die zuvor beschriebene Einstellung der vorbestimmten Auswahl und die Übermittelung der Steuerungs- und/oder Überwachungssignale werden im Folgenden beispielhaft anhand der Figur 3 näher erläutert. Die jeweilige Steuerungseinheit 10, 11 einer der Maschinen 1A, 1B umfasst die Programmbibliothek 37, die zur zyklischen Übermittelung der vorbestimmten Auswahl der Steuerungs- und/oder Überwachungssignale an die freiprogrammierbare Steuerung 21 und umgekehrt ausgebildet und eingerichtet ist. Die Kommunikation zwischen der Steuerungseinheit 10, 11 mit der externen Steuerung 21 bzw. dem auf der externen Steuerung 21 ausgeführten anwenderspezifischen Programm 38 erfolgt über das maschineninternen Netzwerk 18. Die vorbestimmte Auswahl der Steuerungs- und/oder Überwachungsliste ist vorzugsweise als eine Liste in einer XML-Datei 39 aufgeführt, die in der Visualisierungseinrichtung 19 abgelegt ist. Die XML-Datei 39 kann alternativ auch in der Steuerungseinheit 10, 11 gespeichert sein. Die vorliegende Erfindung ist grundsätzlich jedoch nicht ausschließlich auf die Verwendung des XML-Formats beschränkt, vielmehr ist auch jedes andere textbasierte Dateiformat geeignet. Mittels der in der Liste der XML-Datei 39 festgelegten Auswahl sind die zu übermittelnden Steuerungs- und/Überwachungssignale festlegt und damit vorbestimmt. Der Inhalt der XML-Datei 39 ist mittels der hierfür eingerichteten externen Steuerung 21 anpassbar bzw. veränderbar, so dass jederzeit die vorbestimmte Auswahl der Steuerungs- und/oder Überwachungssignale zur Laufzeit angepasst werden kann. Die Programmbibliothek 37 ist dabei derart ausgebildet, dass diese auf sämtliche Steuerungs- und/oder Überwachungssignale zugreifen kann, jedoch nur diejenigen Steuerungs- und/oder Überwachungssignale zyklisch übermittelt, die durch die vorbestimmte Auswahl in der Liste der XML-Datei 39 festgelegt worden sind.

Gemäß einer besonders bevorzugten Ausführung der Erfindung, die im Wesentlichen der zuvor anhand der Figuren 1 und 2 beschriebenen Anordnung bzw. dem zuvor beschriebenen erfindungsgemäßen Verfahren entspricht, umfasst die Anordnung eine Legitimationseinrichtung, die zum Freigeben oder Sperren der Übermittlung der Auswahl der vorbestimmten Steuerungs- und/oder Überwachungssignale in Abhängigkeit mindestens eines Legitimationsdatensatzes ausgebildet und eingerichtet ist. Der Legitimationsdatensatz umfasst vorzugsweise einen Schlüssel, der auf einem Dongle gespeichert ist. Mittels der Legitimationseinrichtung wird der Schlüssel geprüft und in dem Fall, dass es sich um einen zulässigen Schlüssel handelt, die Übermittlung der vorbestimmten Auswahl der Steuerungs- und/oder Überwachungssignale freigegeben, andernfalls erfolgt eine Sperrung. Der Schlüssel und die Prüfung mittels der Legitimationseinrichtungen basieren vorzugsweise auf einem asymmetrischen Verschlüsselungsverfahren, beispielsweise auf der RSA-Verschlüsselung.

Zur Verdeutlichung wird das bereits zuvor im Zusammenhang mit der erfindungsgemäßen Anordnung anhand der Figuren beschriebene Verfahren zur Steuerung und Überwachung der Maschine 1A, 1B der Tabak verarbeitenden Industrie ergänzend im Folgenden beschrieben. Das Verfahren dient der Steuerung und Überwachung der Maschine 1A, 1B und/oder der Maschinenkombination 1 der Tabak verarbeitenden Industrie, wobei die Maschine 1A, 1B und/oder die Maschinenkombination 1 mindestens eine Steuerungseinheit 10, 11 und eine Visualisierungseinheit 19 umfasst. Die Steuerungs- und/oder Überwachungssignale werden zwischen den Steuerungseinheiten 10, 11 sowie der Visualisierungseinheit 19 mittels eines maschineninternen Netzwerks 18 übermittelt. Die Übermittlung erfolgt hierbei vorzugsweise unidirektional, d.h. ausgehend von den Steuerungseinheiten 10, 11 oder der Visualisierungseinheit 19 an die freiprogrammierbare Steuerung 21. Alternativ ist die Übermittlung bidirektional ausgebildet, so dass die Steuerungs- und/oder Überwachungssignale in beide Richtungen, also auch von der externen Steuerung 21 an die Steuerungseinheiten 10, 11 übermittelt werden. Die Übermittlung erfolgt vorzugsweise zyklisch, also sich wiederholend in regelmäßigen Zeitintervallen. Dabei wird jeweils die vorbestimmte Auswahl der Steuerungs- und/oder Überwachungssignale zwischen zumindest einer der Steuerungseinheiten 10, 11 und der externen Steuerung 21 und/oder umgekehrt übermittelt. Die zyklische Übermittlung der vorbestimmten Auswahl der Steuerungs- und/oder Überwachungssignale erfolgt vorzugsweise durch Erzeugen eines Taktes mittels eines Taktgebers, der die zyklische Übermittlung zu vorgegebenen Zeitpunkten auf Basis des erzeugten Taktes steuert. Die vorgegebenen Zeitpunkte des Taktgebers werden hierzu bevorzugt mittels einer der Steuerungseinheiten 10, 11 und/oder der Visualisierungseinheit 19 eingestellt. Die Zeitpunkte und damit die Häufigkeit der pro Zeiteinheit übermittelten Steuerungs- und Überwachungssignale sind mittels der Steuerungseinheiten 10, 11 und/oder der Visualisierungseinheit 19 einstellbar eingerichtet. Vorteilhafterweise ist der zeitliche Abstand zwischen jeweils zwei aufeinanderfolgenden der vorgegebenen Zeitpunkte größer als das vorgegebene minimale Zeitintervall. Besonders bevorzugt ist das vorgegebene minimale Zeitintervall ferner größer als eine kleinste Zykluszeit des maschineninternen Netzwerks 18. Auf diese Weise wird eine externe Analyse maschineninterner Steuerungsabläufe erheblich erschwert bzw. weitestgehend ausgeschlossen. Im Hinblick auf die weiteren Vorteile und technischen Effekte in diesem Zusammenhang wird auf die entsprechenden vorangehenden Textpassagen verwiesen, in denen diese eingehend erläutert werden.

Eine weitere bevorzugte Weiterbildung des erfindungsgemäßen Verfahrens nach Anspruch 9 zeichnet sich dadurch aus, dass das ereignisgesteuerte Übermitteln der vorbestimmten Auswahl der Steuerungs- und Überwachungssignale auf Basis mindestens eines Auslöseereignisses erfolgt. Vorzugsweise ist das Auslöseereignis der Wechsel der Tabaksorte an der Maschine 1A, 1B und/oder der Maschinenkombination 1, beispielsweise durch eine entsprechende Eingabe am Bedienfeld. Weiter bevorzugt ist das Auslöseereignis das Einbringen von Zusatzstoffen, das durch ein Steuersignal und/oder eine Eingabe am Bedienfeld veranlasst wird. Gemäß einer weiteren vorteilhaften Ausbildung ist das Auslöseereignis die Inbetriebsetzung einer Zusatzbaugruppe bzw. einer Zusatzeinrichtung mittels eines Steuersignals und/oder durch Eingabe am Bedienfeld. Gemäß einer weiteren alternativen Ausbildung der Erfindung umfasst das Auslöseereignis das Über- oder Unterschreiten eines einstellbaren Grenzwertes eines Sensorsignals, besonders bevorzugt von Sensorsignalen externer Sensoren, die Umgebungsparameter erfassen, wie beispielsweise die Luftfeuchte und/oder die Umgebungstemperatur oder dergleichen.

Alle vorgenannten Ereignisse werden vorzugsweise durch einen Signalgeber, der zur Steuerung der ereignisgesteuerten Übermitteln angepasst und eingerichtet ist, erfasst bzw. verarbeitet.

Bevorzugt wird die vorbestimmte Auswahl der Steuerungs- und/oder Überwachungssignale mittels der Steuerungseinheiten 10, 11 und/oder der Visualisierungseinheit 19 eingestellt. Besonders bevorzugt wird die Übermittlung der Auswahl der vorbestimmten Steuerungs- und/oder Überwachungssignale in Abhängigkeit mindestens eines Legitimationsdatensatzes 50a, 50b freigegeben oder gesperrt. Auf diese Weise wird die vorbestimmte Auswahl an den Legitimationsdatensatz "gekoppelt", so dass erst nach Überprüfung der Berechtigung anhand des Legitimationsdatensatzes 50a, 50b die vorbestimmte Auswahl der Steuerungs- und/oder Überwachungssignale übermittelt wird. Ferner bietet dies die Möglichkeit, die vorbestimmte Auswahl in Abhängigkeit des Legitimationsdatensatzes 50a, 50b zu steuern.

In der Fig. 4 ist eine schematische Darstellung zur Veranschaulichung der Funktionsweise der Legitimationseinrichtung mittels Kopierschutzstecker und mobilem Datenträger gezeigt. In einem ersten Erstellungsschritt 51 wird der mindestens eine Legitimationsdatensatz 50a, 50b auf Basis von maschinenbezogenen Parametern mindestens einer der Maschinen 1A, 1B und/oder der Maschinenkombination 1 erzeugt. Als maschinenbezogene Parameter kommen bevorzugt Parameter zum Einsatz, anhand derer die Maschine 1A, 1B und/oder die Maschinenkombination 1 eindeutig identifizierbar ist. Maschinenbezogene Parameter sind beispielsweise eine einmalig für jede Maschine 1A, 1B vergebene Maschinennummer oder Produktionsparameter wie z.B. die maximale Maschinendrehzahl, die Anzahl pro Zeiteinheit mit der Maschine 1A, 1B herstellbarer Zigaretten, die Tabakstocklänge, das Tabakstockgewicht oder dergleichen. Aus einem oder mehreren der vorgenannten maschinenbezogenen Parametern, die der Legitimationseinrichtung, beispielsweise aus einer Datenbank 53 in einem Bereitstellungsschritt 52 zur Verfügung gestellt werden, wird in dem Erstellungsschritt 51 der erste Legitimationsdatensatz 50a erstellt. Der erstellte erste Legitimationsdatensatz 50a wird der Datenbank 53 zur Verfügung gestellt und auf einem ersten Datenspeicher 54 gespeichert. Vorzugsweise ist der erste Datenspeicher 54 als Kopierschutzstecker ausgebildet und eingerichtet. Der Kopierschutzstecker ist besonders bevorzugt als USB-Dongle ausgebildet und eingerichtet.

Weiter bevorzugt wird der erste Legitimationsdatensatz 50a in einem ersten Verschlüsselungsschritt 55 mit einem ersten Schlüssel verschlüsselt. Bevorzugt ist der erste Schlüssel als öffentlicher Schlüssel eingerichtet. In einem zweiten Verschlüsselungsschritt 56 wird der mit dem ersten Schlüssel verschlüsselte Legitimationsdatensatz 50a mit einem zweiten Schlüssel verschlüsselt und so ein der zweite Legitimationsdatensatz 50b erzeugt. Vorzugsweise ist der zweite Schlüssel 56 als nicht-öffentlicher und daher privater Schlüssel eingerichtet. Der so verschlüsselte Legitimationsdatensatz 50b wird anschließend in einem zweiten Datenspeicher 57 gespeichert. Vorzugsweise ist der zweite Datenspeicher 57 als mobiler Datenträger ausgebildet, beispielsweise als optische Datenträger, nämlich als CompactDisc (CD), Digital Versatile Disc (DVD) oder dergleichen. Mittels der Legitimationseinrichtung werden die Legitimationsdatensätze 50a, 50b nach entsprechender Entschlüsselung auf ihren Inhalt hin überprüft und das Freigeben bzw. Sperren der Übermittlung der Auswahl der vorbestimmten Steuerungs- und/oder Überwachungssignale in Abhängigkeit der Legitimationsdatensätze 50a, 50b bewirkt. Ferner ist es möglich, die gesamte Maschine 1A, 1B bzw. die Maschinenkombination 1 in Abhängigkeit der vorgenannten Prüfung für den Betrieb freizuschalten bzw. zu sperren. Besonders bevorzugt umfasst der maschinenbezogene Parameter bzw. mindestens einer der Legitimationsdatensätze 50a, 50b einen Zeit- und/oder Datumsstempel anhand dessen die Maschine 1A, 1B bzw. die Maschinenkombination 1 für einen vorgegebenen Zeitraum freigeschaltet wird. Die Legitimationseinrichtung umfasst ferner Schnittstellen mittels derer ein Zugriff auf die Datenspeicher 54, 57 ermöglicht wird, beispielsweise eine USB-Schnittstelle für den Kopierschutzstecker sowie ein optisches Laufwerk für optische Datenträger.

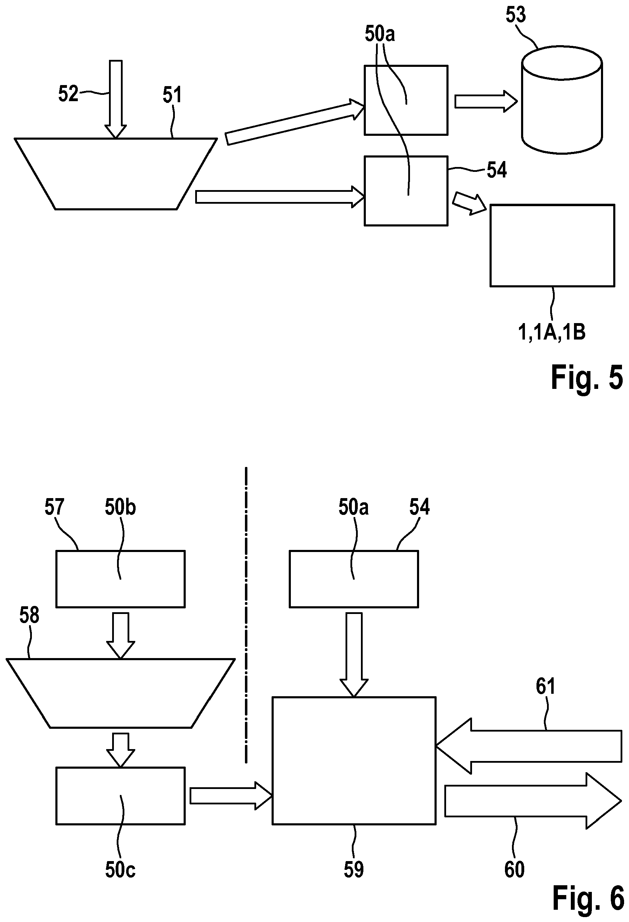

Die in Figur 5 gezeigte schematische Darstellung zur Veranschaulichung der Funktionsweise der Legitimationseinrichtung entspricht im Wesentlichen dem in der Fig. 4 gezeigten Ablauf, jedoch mit dem Unterschied, dass die Legitimationseinrichtung ausschließlich auf den einen Datenspeicher 54 zugreift.

Figur 6 zeigt eine weitere schematische Darstellung zur Veranschaulichung der in Fig. 4 gezeigten Funktionsweise der Legitimationseinrichtung. Bevorzugt wird aus dem zweiten Datenspeicher 57 der zweite Legitimationsdatensatz 50b von der Legitimationseinrichtung eingelesen. Dieser Einlesevorgang erfolgt einmalig zur Initialisierung beim Start der Maschine 1A, 1B bzw. der Maschinenkombination 1. Der eingelesene zweite Legitimationsdatensatz 50b wir in einem ersten Entschlüsselungsschritt 58 mittels des ersten Schlüssels (teil-)entschlüsselt, um so einen verschlüsselten Legitimationsdatensatz 50c zu erhalten. Aus dem verschlüsselten Legitimationsdatensatz 50c und dem ersten Legitimationsdatensatz 50a, der einen oder mehreren maschinenbezogenen Parametern umfasst, wird bzw. werden in einem weiteren Entschlüsselungsschritt 59 der bzw. die maschinenbezogenen Parameter ermittelt. Vorzugsweise wird der Entschlüsselungsschritt 59 zyklisch wiederholt, so dass die Berechtigung zur Benutzung der Maschine 1A, 1B oder der Maschinenkombination 1 bzw. zur Übermittelung der Auswahl der Steuerungs- und/oder Überwachungssignale periodisch überprüft wird. Der oder die auf diesem Weg erhaltenen maschinenbezogenen Parameter werden mittels eines Bereitstellungsschritts 60 von der Legitimationseinrichtung bereitgestellt und durch Abfragen 61 der entsprechenden tatsächlichen maschinenbezogenen Parameter der Maschine 1A, 1B bzw. der Maschinenkombination 1 verglichen. Stimmen die Parameter überein, wird die Benutzung der Maschine 1A, 1B bzw. der Maschinenkombination 1 freigegeben, andernfalls erfolgt ein Sperren der Benutzung. Weiterhin wird die Übermittlung der Auswahl der Steuerungs- und/oder Überwachungssignale in Abhängigkeit der Parameterübereinstimmung freigegeben oder gesperrt. Wie bereits zuvor ausgeführt basieren die Ver- und Entschlüsselung sowie die Prüfung mittels der Legitimationseinrichtungen vorzugweise auf einem asymmetrischen Verschlüsselungsverfahren, beispielsweise auf der RSA-Verschlüsselung.

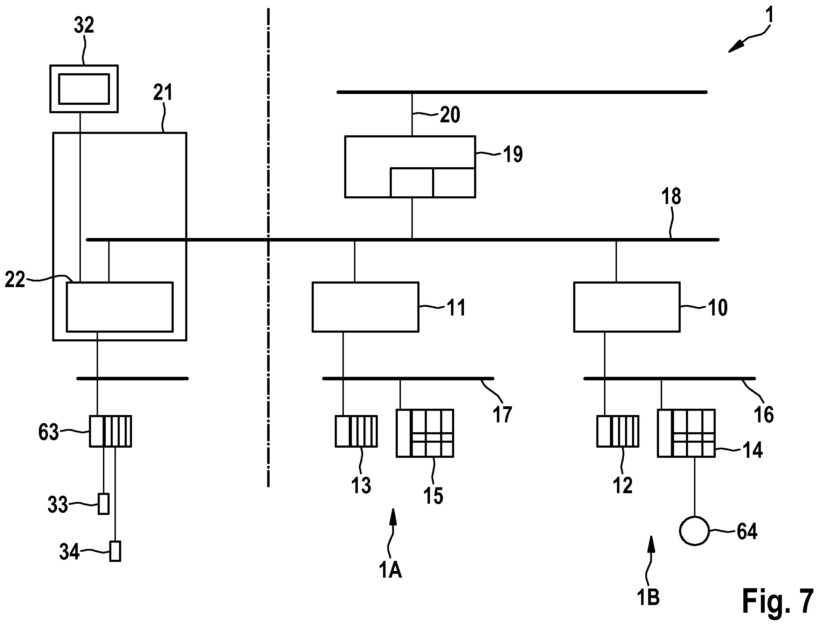

Die Figur 7 zeigte eine schematische Darstellung einer weiteren beispielhaften Ausführung der in der Fig. 1 gezeigten Anordnung. Zur Vermeidung von Wiederholungen sei auf die vorstehenden Ausführungen im Zusammenhang mit der Figur 1 verwiesen. Die in der Figur 7 gezeigte Anordnung umfasst weiter die Sensoren 33 sowie ggf. weitere Eingabeschnittstellen 34, die optional über eine Ein-/Ausgabeschnittstelle 63 mit der Schnittstelle 22 verbunden sind. Vorzugsweise umfassen die Sensoren 33 Sensoren zur Erfassung von Umwelt- und/oder Umgebungsbedingungen. Die Sensoren 33 sind daher bevorzugt beispielsweise als Luftfeuchte-, Temperatur- oder Umgebungstemperatur-, Staubsensoren oder dergleichen ausgebildet.

Die Eingabeschnittstelle 34 ist optional mit einer Bedieneinheit der Maschine 1A, 1B bzw. mit der Maschinenkombination 1 verbunden oder in diese integriert. So können beispielsweise Ereignisse wie der Wechsel der Tabaksorte, das Einbringen von Zusatzstoffen oder die Inbetriebsetzung einer Zusatzbaugruppe bzw. einer Zusatzeinrichtung erfasst werden.

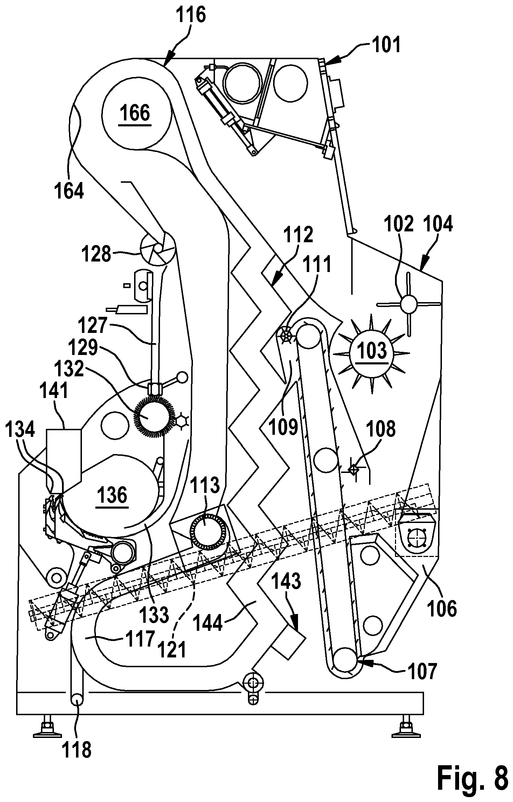

In der Figur 8 ist ein Querschnitt einer Verteilereinheit gezeigt, die beispielsweise mittels der erfindungsgemäßen Anordnung bzw. mittels des Verfahrens gesteuert und überwacht wird. Der in Figur 8 dargestellte Zigarettenmaschinen-Verteiler ist auf bekannte Weise mit einer pneumatischen Tabakbeschickungsschleuse 101 und einem aus zwei kämmenden Rechenwalzen 102 und 103 bestehenden Vorverteiler 104 versehen. Der Vorverteiler 104 mündet in ein Tabakreservoir 106, dem austragseitig eine Zugabewalze 107 zugeordnet ist, die mit einer Tabak abkämmenden Paddelwalze 108 und mit einer Tabak in einen abwärts führenden Zuführschacht 109 ausschlagenden Vereinzelungswalze 111 zusammenwirkt. Der Zuführschacht 109 mündet seitlich in den mittleren Abschnitt eines Sichtmittels in Form eines vertikal angeordneten Zick-Zack-Sichters 112. Der Zick-Zack-Sichter 112 ist Teil eines durch ein Querstromgebläse 113 betriebenen Umluftsystems.

In das Umluftsystem des Sichterkreislaufs ist außerdem ein als Coanda-Abscheider ausgebildeter Tabak-/Luftabscheider 116 integriert, welcher beidseitig einer Abscheidekante einerseits mit der Saugseite des Querstromgebläses 113 verbunden ist und andererseits in eine oberhalb eines Stauschachtes 127 angeordnete Zellenradschleuse 128 einmündet. Der im Wesentlichen senkrecht angeordnete Stauschacht 127 endet mit seinem als vibrierender Schachtauslass 129 ausgebildeten unteren Ende über einer mit einer Ausschlagwalze 131 zusammenwirkenden Entnahmewalze 132. Unterhalb der Entnahmewalze 132 erstreckt sich ein Leitkanal, der durch eine gekrümmte Führungsfläche 133 begrenzt ist, die in eine zweibahnig gegeneinander abgesetzte Strömungsfläche 134 eines Wälzraumes 136 übergeht.

Der Wälzraum 136 ist in ein weiteres Umluftsystem 137 integriert, welches mittels eines Umluftgebläses 138 an der Strömungsfläche 134 eine eng anliegende, Tabak transportierende Luftströmung erzeugt. Der Wälzraum 136 hat über eine obere Siebabdeckung 139 eine Verbindung zur Atmosphäre. Die zweigeteilte, aufwärts führende Strömungsfläche 134 mündet unterhalb einer Strangaufbaueinheit 141 einer Doppelstrangmaschine. Die als Saugstrangförderer ausgebildete Strangaufbaueinheit 141 wird durch ein Saugstranggebläse 42 betrieben.

Mittels des Steilförderbands 107, welches aus einem Tabakreservoir 106 Tabak entnimmt, wird Tabak aufwärts transportiert und mit Hilfe der Vereinzelungswalze 111 in den Tabak-Zuführschacht 109 oberhalb des mittleren Höhenabschnitts des Zick-Zack-Sichters 112 überführt. Im Strangbildungsprozess abgenommener Überschusstabak wird mittels einer Förderschnecke 121 in das Tabakreservoir 106 des Steilförderbandes 107 zurückgeführt. Die Transportgeschwindigkeit des Steilförderbandes 107 wird in Abhängigkeit vom Tabakniveau im Stauschacht 27 gesteuert.

Der Steilförderantrieb 107 wird mittels eines Steilförderantriebs 64 (vgl. Figur 7) angetrieben. Der Steilförderantrieb 64 ist mit der Antriebssteuerung 14 elektrisch verbunden, die über den Feldbus 16 mittels der Steuerungseinheit 10 gesteuert wird.

Die vorliegende Erfindung eignet sich insbesondere zur Steuerung und Überwachung der Antriebe der in der Figur 8 gezeigten Verteilereinheit. Besonders bevorzugt ist die erfindungsgemäße Anordnung derart eingerichtet, dass diese die Drehzahlen und/oder die Drehzahlverhältnisse der verschiedenen Antriebe der Verteilereinheit, beispielsweise beim Tabaksortenwechsel, steuert. Dies umfasst sowohl die Steuerung und/oder Überwachung der Antriebsdrehzahlen als auch die Steuerung und/oder Überwachung der zeitlichen Aspekte der Antriebssteuerung.

Ferner ist die erfindungsgemäße Anordnung angepasst, die Einstellung bzw. Anpassung der Sollwerte der Produktionsgeschwindigkeit sowohl statisch als auch dynamisch anzupassen. Vorzugsweise werden die Sollwerte während der Anlaufphase der Maschine 1A, 1B bzw. der Maschinenkombination 1 entsprechend verändert. Die Überwachung umfasst ferner die Visualisierung der aktuellen Drehzahlen bzw. der Produktionsgeschwindigkeit sowie die Überwachung des Gewichtstransportbandes. Darüber hinaus sind mittels der freiprogrammierbaren Steuerung 21 weitere Analysen und Überwachungen möglich, beispielsweise das Durchführen der Analyse des Produktionsprozesse, die Installation von weiteren Aktuatoren und Sensoren und deren Überwachung sowie die Überwachung von Antriebsmodifikationen.

## Patentansprüche

1. Anordnung zur Steuerung und Überwachung einer Maschine (1A,1B) und/oder Maschinenkombination (1) der Tabak verarbeitenden Industrie, umfassend
mindestens eine Visualisierungseinheit (19) und eine Steuerungseinheit (10, 11), wobei
die Steuerungseinheit (10, 11) und die Visualisierungseinheit (19) zur Übermittlung von Steuerungs- und Überwachungssignalen mittels eines maschineninternen Netzwerks (18) miteinander verbunden sind, und
mindestens eine externe Steuerung (21), die über eine Schnittstelle (22) mit dem maschineninternen Netzwerk (18) verbunden ist, wobei
die Schnittstelle (22), die Steuerungseinheiten (10, 11), die Visualisierungseinheit (19) und/oder die externe Steuerung (21) zur zyklischen Übermittlung einer vorbestimmten Auswahl von Steuerungs- und Überwachungssignalen zwischen zumindest einer Steuerungseinheit (10, 11) und der Visualisierungseinheit (19) und der externen Steuerung (21) eingerichtet und ausgebildet sind,
**dadurch gekennzeichnet, dass** die Anordnung mindestens einen Taktgeber zur Steuerung der zyklischen Übermittlung der vorbestimmten Auswahl der Steuerungs- und/oder Überwachungssignale zu vorgegebenen Zeitpunkten umfasst und wobei
die mindestens eine Steuerungseinheit (10, 11) oder die Visualisierungseinrichtung (19) den mindestens einen Taktgeber aufweist und dass der Taktgeber und die mindestens eine Steuerungseinheit (10, 11) und/oder die Visualisierungseinheit (19) derart eingerichtet und ausgebildet sind, dass die vorgegebenen Zeitpunkte, zu denen die vorbestimmte Auswahl der Steuerungs- und Überwachungssignale übermittelt wird, einstellbar sind und,
dass der zeitliche Abstand zwischen jeweils zwei aufeinanderfolgenden vorgegebenen Zeitpunkten größer als ein vorgegebenes minimales Zeitintervall ist, wobei das vorgegebene minimale Zeitintervall größer als eine kleinste Zykluszeit des maschineninternen Netzwerks (18) ist.

2. Anordnung nach einem der Anspruch 1, **dadurch gekennzeichnet, dass** die vorbestimmte Auswahl der Steuerungs- und Überwachungssignale mittels der mindestens einen Steuerungseinheit (10, 11) und/oder der Visualisierungseinheit (19) einzustellen ist.

3. Anordnung nach einem der Ansprüche 1 oder 2, **dadurch gekennzeichnet, dass** die externe Steuerung (21) als hardware- und/oder softwarebasierte, speicherprogrammierbare Steuerung ausgebildet ist.

4. Anordnung nach einem der Ansprüche 1 bis 3, **dadurch gekennzeichnet, dass** die Anordnung mindestens eine Legitimationseinrichtung umfasst, die zum Freigeben oder Sperren der Übermittlung der Auswahl der vorbestimmten Steuerungs- und Überwachungssignale in Abhängigkeit mindestens eines Legitimationsdatensatzes (50a, 50b) ausgebildet und eingerichtet ist.

5. Anordnung nach Anspruch 4, **dadurch gekennzeichnet, dass** die Legitimationseinrichtung mindestens einen Datenspeicher (54, 57) umfasst, wobei der Datenspeicher (54, 57) mindestens einen der Legitimationsdatensätze (50a, 50b) umfasst.

6. Anordnung nach Anspruch 5, **dadurch gekennzeichnet, dass** mindestens ein erster der Datenspeicher (54) als Kopierschutzstecker und/oder mindestens ein zweiter der Datenspeicher (57) als mobiler Datenträger ausgebildet und eingerichtet ist.

7. Verfahren zur Steuerung und Überwachung einer Maschine (1A,1B) und/oder einer Maschinenkombination (1) der Tabak verarbeitenden Industrie, wobei die Maschine (1A,1B) oder die Maschinenkombination (1) mindestens eine Steuerungseinheit (10, 11) und eine Visualisierungseinheit (19) aufweist, umfassend
Übermitteln von Steuerungs- und Überwachungssignalen zwischen den Steuerungseinheiten (10, 11) und der Visualisierungseinheit (19) mittels eines maschineninternen Netzwerks (18),
zyklisches Übermitteln einer vorbestimmten Auswahl der Steuerungs- und/oder Überwachungssignale zwischen zumindest einer der Steuerungseinheiten (10, 11) und/oder der Visualisierungseinheit (19) und der externen Steuerung (21),
**gekennzeichnet durch**
Erzeugen eines Taktes mittels eines Taktgebers und Steuern der zyklischen Übermittlung der vorbestimmten Auswahl der Steuerungs- und Überwachungssignale zu vorgegebenen Zeitpunkten auf Basis des erzeugten Taktes und durch Einstellen der vorgegebenen Zeitpunkte des Taktgebers mittels der mindestens einen Steuerungseinheit (10, 11) und/oder der Visualisierungseinrichtung (19) wobei
der zeitliche Abstand zwischen jeweils zwei aufeinanderfolgenden vorgegebenen Zeitpunkten größer als ein vorgegebenes minimales Zeitintervall ist, wobei das vorgegebene minimale Zeitintervall größer als eine kleinste Zykluszeit des maschineninternen Netzwerks (18) ist.

8. Verfahren nach Anspruch 7, **gekennzeichnet durch** Einstellen der vorbestimmten Auswahl der Steuerungs- und Überwachungssignale mittels der externen Steuerung (21).

9. Verfahren nach einem der Ansprüche 7 oder 8, **gekennzeichnet durch** Freigeben oder Sperren der Übermittlung der Auswahl der vorbestimmten Steuerungs- und Überwachungssignale in Abhängigkeit mindestens eines Legitimationsdatensatzes (50a, 50b).

10. Verfahren nach Anspruch 9, **gekennzeichnet durch** Erzeugen des mindestens einen Legitimationsdatensatzes (50a, 50b) auf Basis von maschinenbezogenen Parametern mindestens einer der Maschinen (1A, 1 B) und/oder der Maschinenkombination (1).

11. Verfahren nach einem der Ansprüche 9 oder 10, **dadurch gekennzeichnet, dass** mindestens einer der Legitimationsdatensätze (50a, 50b) auf einem Kopierschutzstecker und/oder einem mobilen Datenträgers gespeichert wird.

## Claims

1. Assembly for controlling and monitoring a machine (1A,1B) and/or machine line (1) for the tobacco-processing industry, comprising
at least one visualisation unit (19) and a control unit (10, 11), wherein
the control unit (10, 11) and the visualisation unit (19) are connected to each other in order to transfer control and monitoring signals by means of a machine-internal network (18), and
at least one external control (21), which is connected by means of an interface (22) to the machine-internal network (18), wherein
the interface (22), the control units (10, 11), the visualisation unit (19) and/or the external control (21) are arranged and configured for the cyclic transfer of a predetermined selection of control and monitoring signals between at least one control unit (10, 11) and the visualisation unit (19) and the external control (21),
**characterized in that** the assembly comprises at least one clock pulse generator for the control of the cyclic transfer of the predetermined selection of the control and/or monitoring signals at predetermined points of time, and wherein
the at least one control unit (10, 11) or the visualisation device (19) comprises the at least one clock pulse generator, and that the clock pulse generator and the at least one control unit (10, 11) and/or the visualisation unit (19) are arranged and configured in such a way that the predetermined points of time at which the predetermined selection of the control and monitoring signals are transferred are adjustable, and,
that the temporal interval between every two sequential predetermined points of time is greater than a predetermined minimum time interval, wherein the predetermined minimum time interval is greater than the smallest cycle time of the machine-internal network (18).

2. Assembly according to claim 1, **characterized in that** the predetermined selection of control and monitoring signals is to be adjusted by means of the at least one control unit (10, 11) and/or the visualisation unit (19).

3. Assembly according to one of claims 1 or 2, **characterized in that** the external control (21) is configured as a hardware and/or software-based memory-programmable control.

4. Assembly according to any one of claims 1 to 3, **characterized in that** the assembly comprises at least one authentication device, which is configured and arranged for the release or blocking of the transfer of the selection of predetermined control and monitoring signals as a function of at least one authentication data set (50a, 50b).

5. Assembly according to claim 4, **characterized in that** the authentication device comprises at least one data memory (54, 57), wherein the data memory (54, 57) comprises at least one of the authentication data sets (50a, 50b).

6. Assembly according to claim 5, **characterized in that** at least a first of the data memories (54) is configured and arranged as a dongle and/or at least a second of the data memories (57) is configured and arranged as a mobile data carrier.

7. Method for the control and monitoring of a machine (1A,1B) and/or a machine line (1) for the tobacco-processing industry, wherein the machine (1A,1B) or the machine line (1) comprises at least one control unit (10, 11) and a visualisation unit (19), comprising
the transfer of control and monitoring signals between the control units (10, 11) and the visualisation unit (19) by means of a machine-internal network (18),
cyclic transfer of a predetermined selection of the control and/or monitoring signals between at least one of the control units (10, 11) and/or the visualisation unit (19) and the external control (21),
**characterized by**
the generation of a clock pulse by means of a clock pulse generator and controlling of the cyclic transfer of the predetermined selection of the control and monitoring signals at predetermined points of time on the basis of the generated pulse and
by the adjustment of the predetermined points of time of the clock pulse generator by means of the at least one control unit (10, 11) and/or the visualisation device (19) wherein
the time interval between, in each case, two sequential predetermined points of time is greater than a predetermined minimum time interval, wherein the predetermined minimum time interval is greater than the smallest time cycle of the machine-internal network (18).

8. Method according to claim 7, **characterized by** the adjustment of the predetermined selection of the control and monitoring signals by means of the external control (21).

9. Method according to one of claims 7 or 8, **characterized by** the release or blocking of the transfer of the selection of the predetermined control and monitoring signals as a function of the at least one authentication data set (50a, 50b).

10. Method according to claim 9, **characterized by** the production of the at least one authentication data set (50a, 50b) on the basis of machine-related parameters of at least one of the machines (1A, 1 B) and/or of the machine line (1).

11. Method according to one of claims 9 or 10, **characterized in that** at least one of the authentication data sets (50a, 50b) is stored on a dongle and/or on a mobile data carrier.

## Revendications

1. Agencement pour la commande et la surveillance d'une machine (1A, 1B) et/ou d'une combinaison de machines (1) de l'industrie de traitement du tabac, comprenant
au moins une unité de visualisation (19) et une unité de commande (10, 11),
l'unité de commande (10, 11) et l'unité de visualisation (19) étant reliées l'une à l'autre par un réseau interne de machine (18) pour la transmission de signaux de commande et de visualisation, et
au moins une commande externe (21) reliée au réseau interne de machine (18) par une interface (22),
l'interface (22), les unités de commande (10, 11), l'unité de visualisation (19) et/ou la commande externe (21) étant agencées et conformées pour une transmission cyclique d'une sélection prédéterminée de signaux de commande et de surveillance entre au moins une unité de commande (10, 11) et l'unité de visualisation (19) et la commande externe (21),
**caractérisé en ce que** l'agencement comprend au moins une horloge pour la commande de la transmission cyclique de la sélection prédéterminée des signaux de commande et/ou des signaux de surveillance à des moments prédéterminés, et
ladite au moins une unité de commande (10, 11) ou l'unité de visualisation (19) comprenant ladite au moins une horloge, et **en ce que** l'horloge et ladite au moins une unité de commande (10, 11) et/ou l'unité de visualisation (19) sont agencées et conformées de façon telle que les moments prédéterminés auxquels la sélection prédéterminée des signaux de commande et de surveillance sont transmis, soient réglables et
**en ce que** l'intervalle de temps entre deux moments prédéterminés successifs respectifs est supérieur à un intervalle de temps minimal prédéterminé, l'intervalle de temps minimal prédéterminé étant supérieur à une durée de cycle la plus courte du réseau interne de machine (18).

2. Agencement selon la revendication 1, **caractérisé en ce que** la sélection prédéterminée des signaux de commande et de surveillance est à régler à l'aide de ladite au moins une unité de commande (10, 11) et/ou de l'unité de visualisation (19).

3. Agencement selon l'une des revendication 1 ou 2, **caractérisé en ce que** la commande externe (21) est conformée comme commande à mémoire programmable basée sur du matériel et/ou sur une logique.

4. Agencement selon l'une des revendications 1 à 3, **caractérisé en ce que** l'agencement comprend au moins un dispositif de légitimation agencé et conformé pour l'autorisation ou le blocage de la transmission de la sélection des signaux prédéterminés de commande et de surveillance en fonction d'au moins un jeu de données de légitimation (50a, 50b).

5. Agencement selon la revendication 4, **caractérisé en ce que** le dispositif de légitimation comprend au moins une mémoire de données (54, 57), la mémoire de données (54, 57) comprenant au moins un des jeux de données de légitimation (50a, 50b).

6. Agencement selon la revendication 5, **caractérisé en ce qu'**au moins une première des mémoires de données (54) est agencée et conformée comme clé de protection logicielle et/ou au moins une deuxième des mémoires de données (57) est agencée et conformée comme mémoire de données mobile.

7. Procédé de commande et de surveillance d'une machine (1A, 1B) et/ou d'une combinaison de machines (1) de l'industrie de traitement du tabac, la machine (1A, 1B) ou la combinaison de machines (1) comprenant au moins une unité de commande (10, 11) et une unité de visualisation (19), comprenant
transmission de signaux de commande et de visualisation entre les unités de commande (10, 11) et l'unité de visualisation (19) à l'aide d'un réseau interne de machine (18),
transmission cyclique d'une sélection prédéterminée des signaux de commande et/ou des signaux de surveillance entre au moins une des unités de commande (10, 11) et/ou l'unité de visualisation (19) et la commande externe (21),
**caractérisé par**
la génération d'un signal d'horloge à l'aide d'une horloge et commande de la transmission cyclique de la sélection prédéterminée des signaux de commande et/ou des signaux de surveillance à des moments prédéterminés sur la base du signal d'horloge engendré, et par un réglage des moments prédéterminés de l'horloge à l'aide de ladite au moins une unité de commande (10, 11) et/ou de l'unité de visualisation (19),
l'intervalle de temps entre deux moments prédéterminés successifs respectifs étant supérieur à un intervalle de temps minimal prédéterminé, l'intervalle de temps minimal prédéterminé étant supérieur à une durée de cycle la plus courte du réseau interne de machine (18).

8. Procédé selon la revendication 7, **caractérisé par** un réglage de la sélection prédéterminée des signaux de commande et de surveillance à l'aide de la commande externe (21).

9. Procédé selon l'une des revendications 7 ou 8, **caractérisé par** une autorisation ou un blocage de la transmission de la sélection des signaux prédéterminés de commande et de surveillance en fonction d'au moins un jeu de données de légitimation (50a, 50b).

10. Procédé selon la revendication 9, **caractérisé par** la génération dudit au moins un jeu de données de légitimation (50a, 50b) sur la base de paramètres de machine d'au moins une des machines (1A, 1B) et/ou de la combinaison de machines (1).

11. Procédé selon l'une des revendications 9 ou 10, **caractérisé en ce qu'**au moins un des jeux de données de légitimation (50a, 50b) est enregistré sur une clé de protection logicielle et/ou une mémoire de données mobile.
